(19) Europäisches Patentamt
European Patent Office
Office européen des brevets

(11) **EP 4 177 840 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **22204996.7**

(22) Anmeldetag: **02.11.2022**

(51) Internationale Patentklassifikation (IPC):
**G06T 7/80** (2017.01)

(52) Gemeinsame Patentklassifikation (CPC):
**G06T 7/80;** G06T 2207/30208

(54) **VERFAHREN ZUR KALIBRIERUNG EINER KAMERA**

METHOD FOR CALIBRATING A CAMERA

PROCÉDÉ D'ÉTALONNAGE D'UNE CAMÉRA

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.11.2021 DE 102021128747**

(43) Veröffentlichungstag der Anmeldung:
**10.05.2023 Patentblatt 2023/19**

(73) Patentinhaber: **Bundesdruckerei GmbH 10969 Berlin (DE)**

(72) Erfinder:
• **Volnhals, Matthias 82194 Gröbenzell (DE)**
• **Schultheiß, Christoph 85622 Feldkirchen (DE)**

(74) Vertreter: **Hentrich Patent- & Rechtsanwaltspartnerschaft mbB Syrlinstraße 35 89073 Ulm (DE)**

(56) Entgegenhaltungen:
**EP-A1- 3 457 682**

• NOWAKOWSKI A ET AL: "Lens Radial Distortion Calibration Using Homography of Central Points", EUROCON, 2007. THE INTERNATIONAL CONFERENCE ON "COMPUTER AS A TO OL", IEEE, PI, 9 September 2007 (2007-09-09), pages 340 - 343, XP031223000, ISBN: 978-1-4244-0812-2
• CHEN LONG ET AL: "Research on the Calibration of Binocular Camera Based on BP Neural Network Optimized by Improved Genetic Simulated Annealing Algorithm", IEEE ACCESS, IEEE, USA, vol. 8, 5 May 2020 (2020-05-05), pages 103815 - 103832, XP011792864, DOI: 10.1109/ ACCESS.2020.2992652

**Beschreibung**

Die Erfindung betrifft ein Verfahren zur Kalibrierung einer Kamera, ein Verfahren zum Vermessen eines Sicherheits- oder Identifikationsdokuments mittels einer Kamera und ein Verfahren zur Transformation zumindest einer Position oder eines Abstandes von Weltkoordinaten in Bildkoordinaten und umgekehrt, insbesondere bei einem Sicherheits- oder Identifikationsdokument.

Insbesondere im Rahmen einer Qualitätskontrolle und der Produktion von Sicherheits- oder Identifikationsdokumenten werden Sicherheits- oder Identifikationsdokumente mittels einer Kamera aufgenommen. Um sicherzustellen, dass beispielsweise die Abmessungen des Sicherheits- oder Identifikationsdokuments und auch die Position oder Größe eines Identifikationsbildes, der Beschriftung oder der Sicherheitsmerkmale den Vorgaben entsprechen, müssen Pixelkoordinaten, also Bildkoordinaten, in metrische Koordinaten (Millimeterkoordinaten), also Weltkoordinaten transformiert werden und umgekehrt. Dies ist nötig, um Abstände oder Positionen, die üblicherweise in Weltkoordinaten angegeben sind, mit Abständen auf einem mit einer Kamera aufgenommenen Bild eines Sicherheits- oder Identifikationsdokuments vergleichen zu können. In diesem Zusammenhang ist es notwendig, die Kamera zu kalibrieren, sprich eine Transformationsvorschrift T zu finden, mittels derer die Transformation von Bildkoordinaten in Weltkoordinaten und umgekehrt möglich ist.

Aus dem Stand der Technik ist bekannt, bei der Kalibrierung der Kamera neben der perspektivischen Transformation, also der perspektivischen Achse und einer affinen Abbildung, welche die Rotation, die Translation, die Deformation und die Pixelgröße berücksichtigt, auch die durch das verwendete Objektiv hervorgerufenen optischen Abbildungsfehler, wie die Verzeichnung erster Ordnung zu berücksichtigen.

Die Verzeichnung eines Kamera-Objektivs kann in der Regel durch ein radiales Modell sehr genau beschrieben werden. In diesem Modell werden die verzeichnungsfreien Pixel-Koordinaten aus den verzeichneten Pixelkoordinaten bestimmt, indem ihr Abstand vom optischen Zentrum $c$ mit einem Faktor $L$ skaliert wird. Dieser Faktor $L(r)$ ist selbst abhängig vom Abstand $r$ der jeweiligen Koordinate vom optischen Zentrum $c$.

$$L(r) = k_0 + r k_1 + r^2 k_2$$

L ist dabei ein Polynom eines gewissen Grads. Die Ordnung der Verzeichnungskorrektur ergibt sich aus der Ordnung, mit der der Abstand/Radius $r$ in den Faktor eingeht. Bei der Korrektur der Verzeichnung erster Ordnung ist $L(r)$ linear abhängig von $r$ und $k_1$ ist der Korrekturfaktor erster Ordnung, während bei der Korrektur zweiter Ordnung $L(r)$ eine quadratische Funktion von r ist, mit einem Korrekturfaktor $k_2$ zweiter Ordnung. $k_0$ ist wiederum die Skalierung. Die Verzeichnung wirkt sich somit aufgrund der radialen Abhängigkeit von $L(r)$ mit zunehmendem Abstand vom Bildzentrum stärker aus.

Aus dem Stand der Technik ist es bekannt, eine Kamerakalibrierung mit der Aufnahme einer Kalibrierplatte mittels eines Algorithmus der kleinsten quadratischen Abweichung (engl.: Least-Squares-Verfahren) zu bestimmen, wobei ausschließlich die Verzeichnung erster Ordnung berücksichtigt wird und somit die Verzeichnung zweiter Ordnung unberücksichtigt bleibt. Die Kamerakalibrierung ist somit ungenauer, Abstände können weniger genau bestimmt werden. Dies führt aufgrund der radialen Abhängigkeit der Verzeichnung insbesondere an den Rändern eines Bildes zu fehlerhaft oder ungenau bestimmten Strecken oder Abständen. Weiterhin ist es auch bekannt, komplexere Modelle beispielsweise für die tangentiale Verzeichnung zu verwenden. Diese haben allerdings den Nachteil, dass sie nur numerisch invertiert werden können.

"Lens Radial Distortion Calibration Using Homography of Central Points", Nowakowski A et a, EUROCON, 2007, THE INTERNATIONAL CONFERENCE ON "COMPUTER AS A TOOL", IEEE, PI, 9. September 2007, Seiten 340 - 343, ISBN: 978-1-4244-0812-2 offenbart ein Kamerakalibrierungsverfahren unter Berücksichtigung der Verzeichnung erster Ordnung und höherer Ordnung, wobei die Parameter für die Verzeichnung mittels eines Least Square Algorithmus bestimmt werden. Die EP 3 457 682 A1 offenbart ein Kalibrierverfahren bei der die Verzeichnung erster und zweiter Ordnung berücksichtigt wird.

"Research on the Calibration of Binocular Camera Based on BP Neural Network Optimized by Improved Genetic Sumulated Annealing Algorithm" Chen Long et al, IEEE Access, IEEE, USA Bd. 8, 5. Mai 2020, Seiten 103815 - 103832, DOI: 10.1109/ ACCESS.2020.2992652 offenbart ebenfalls ein Kamerakalibrierungsverfahren, wobei die Parameter für die Transformation mittels eines genetischen Algorithmus mit simulated annealing ermittelt werden.

Daher ist es Aufgabe der vorliegenden Erfindung, ein Verfahren zur Kalibrierung einer Kamera, ein Verfahren zum Vermessen eines Sicherheits- oder Identifikationsdokuments und ein Verfahren zur Transformation zumindest einer Position oder eines Abstandes von Weltkoordinaten in Bildkoordinaten bereitzustellen, welches eine genauere Bestimmung des Abstandes von zwei Punkten ermöglicht.

Die das Verfahren zur Kalibrierung einer Kamera betreffende Aufgabe wird mit dem Merkmalsbestand des Anspruchs 1 gelöst. Die das Verfahren zum Vermessen eines Sicherheits- oder Identifikationsdokuments mittels einer Kamera betreffende Aufgabe wird durch den Merkmalsbestand des Anspruchs 12 gelöst und die das Verfahren zur Transformation zumindest einer Position oder eines Abstandes von Weltkoordinaten in Bildkoordinaten betreffende Aufgabe wird durch den Merkmalsbestand des Anspruchs 13 gelöst. Vorteilhafte Ausgestaltungen mit zweckmäßigen Weiterbildungen der Erfindung sind in den abhängigen Ansprüchen angegeben.

Das Verfahren zur Kalibrierung einer Kamera mit einer Kalibrierplatte, die eine Mehrzahl von mit einem vorbekannten Abstand zueinander und/oder mit einer vorbekannten Position angeordneten Kalibrierpunkten aufweist, umfasst die folgenden Schritte:

- Aufnahme der Kalibrierplatte zusammen mit den Kalibrierpunkten mittels der Kamera,
- Positionsbestimmung der Mehrzahl an Kalibrierpunkten in Bildkoordinaten mittels einer Auswerteeinheit,
- Transformation der Bildkoordinaten der Kalibrierpunkte in Weltkoordinaten mittels einer vorgegebenen Anfangs-transformationsvorschrift $T_0$, die Parameter enthält, welchen vorgegebene Startwerte zugewiesen sind, wobei die Parameter die Koeffizienten für eine perspektivische Transformation, für eine Korrektur der Verzeichnung erster Ordnung und für eine Korrektur der Verzeichnung zweiter Ordnung umfassen,
- iterative Optimierung der Werte der Parameter der Transformationsvorschrift T mittels eines nichtlinearen und ableitungsfreien Näherungsverfahrens anhand der Abweichung der erfassten Position der Mehrzahl von Kalibrierpunkte mit der vorbekannten Position der Kalibrierpunkte an der Kalibrierplatte und/oder anhand der Abweichung des erfassten Abstands zwischen zwei der erfassten Kalibrierpunkte und des bekannten Abstands zwischen den beiden korrespondierenden Kalibrierpunkten an der Kalibrierplatte, so lange, bis sich die Abweichung in einem Iterationsschritt von einer Abweichung in einem unmittelbar nachfolgenden Iterationsschritt nicht mehr unterscheidet oder höchstens um ein Toleranzwert unterscheidet, wobei im Anschluss an die Optimierung der Werte der Parameter der Transformation mittels des nichtlinearen und ableitungsfreien Näherungsverfahrens zusätzlich die Werte der Koeffizienten der Verzeichnung erster Ordnung mittels eines Algorithmus der kleinsten quadratischen Abweichung nachoptimiert werden und/oder dass im Anschluss an die Optimierung der Werte der Parameter der Transformation mittels des nichtlinearen und ableitungsfreien Näherungsverfahrens zusätzlich die Werte der Koeffizienten der Verzeichnung zweiter Ordnung mittels eines Algorithmus der kleinsten quadratischen Abweichung nachoptimiert werden.

Durch die iterative Optimierung der Werte der Parameter der Transformationsvorschrift mittels des nichtlinearen und ableitungsfreien Näherungsverfahrens kann sowohl die Korrektur der Verzeichnung erster Ordnung als auch die Korrektur der Verzeichnung zweiter Ordnung berücksichtigt werden. Darüber hinaus besteht der Vorteil darin, dass die Transformationsvorschrift analytisch invertierbar ist, da sie nur eine radiale Verzeichnungskorrektur maximal zweiter Ordnung und keine höheren Ordnungen enthält sodass sowohl eine Transformation von Bildkoordinaten (Pixelkoordinaten) in Weltkoordinaten (metrische Koordinaten, beispielsweise Millimeterkoordinaten) als auch umgekehrt möglich ist. Dies ermöglicht beispielsweise im Nachhinein Informationen auf dem Bild darstellen zu können. Die Koeffizienten für eine perspektivische Transformation umfassen dabei eine perspektivische Achse und eine affine Abbildung, Koeffizienten für eine Rotation, eine Translation, eine Deformation und eine Pixelgröße. Die Korrektur der Verzeichnung umfasst wiederum Koeffizienten für das optische Zentrum $c$, die Skalierung $k_0$, sowie den Koeffizienten der Verzeichnung erster Ordnung $k_1$ und zweiter Ordnung $k_2$.

Im Rahmen des Verfahrens hat es sich als vorteilhaft erwiesen, wenn das Näherungsverfahren ein Downhill-Simplex-Verfahren ist. Das Downhill-Simplex-Verfahren, auch Nelder-Mead-Verfahren genannt, ist eine Methode zur Optimierung nichtlinearer Funktionen und findet ein lokales Optimum einer Funktion mit Endparametern, wobei durch Vergleichen der Funktionswerte mehrere Punkte im Parameterraum mit Schrittweitensteuerung die Tendenz der Werte und der Gradienten in Richtung dem Optimum angenähert wird. Der Algorithmus basiert auf einem Simplex, dem einfachsten Volumen im N-dimensionalen Parameterraum, wobei jeder Punkt einem Satz Parametern entspricht und man zu jedem Punkt einen Funktionswert berechnet, den man als Fehler oder Kostenwert ansehen kann. Unter diesen Punkten ermittelt man den schlechtesten und den besten wobei von einem Iterationsschritt zum nächsten der schlechteste dieser Punkte durch einen neuen ersetzt wird, der hoffentlich besser ist. Umgekehrt wird der "beste Punkt" als bisher beste Lösung beibehalten. Die Variation der Parameter erfolgt dabei bevorzugt auf multiplikative Weise für die Parameter der perspektivischen Transformationsparameter und auf additive Weise für die Koeffizienten der Verzeichnung erster Ordnung und zweiter Ordnung.

Alternativ ist es auch möglich als Näherungsverfahren ein Algorithmus der simulierten Abkühlung (englisch: "Simulated Annealing") zu verwenden. Beim Simulated Annealing wird der energetisch günstigste Zustand eines Systems, welches mithilfe der Boltzmann-Statistik beschrieben werden kann, gesucht.

In einer weiteren alternativen Ausführungsform ist es auch möglich, dass das nichtlineare ableitungsfreie Näherungsverfahren ein evolutionärer Algorithmus, insbesondere ein genetischer Algorithmus ist. Bei einem evolutionären oder genetischen Algorithmus werden die Lösungsmöglichkeiten für das Optimierungsproblem als Organismen, also als Individuum, verstanden. Jede Lösungsmöglichkeit wird somit durch ein Genom, also sein Erbgut beschrieben. Zudem bestimmt eine Fitnessfunktion die Brauchbarkeit eines jeden Genoms, also einer jeden Lösungsmöglichkeit. Zunächst wird zur Initialisierung jedem Individuum von einer Anzahl an Individuen (der Grundpopulation) also jeder Lösungsmöglichkeit Startwerte für jedes Gen des Genoms zugewiesen bzw. zufällig erzeugt und für jede Lösungsmöglichkeit die Brauchbarkeit mittels der Fitnessfunktion bestimmt also dieser zugewiesen (Evaluation). Im Anschluss wird eine Selektion durchgeführt, also ein Teil der anhand der Fitnessfunktion als unbrauchbar oder unbrauchbarer bestimmten Lösungsmöglichkeiten/Individuen entfernt/verworfen. Das heißt, alle Individuen/Lösungsmöglichkeiten deren zugewiesene Brauchbarkeit geringer als ein vorgegebener Grenzwert ist, werden verworfen. Danach werden die Gene durch Klonen (einfaches Kopieren) und/oder Kombination mit einem anderen Individuum/Lösungsmöglichkeit wieder auf die ursprüngliche Anzahl an Individuen vermehrt. Im Anschluss werden bei einem vorgegebenen Teil der Lösungsmöglichkeiten Teile der Gene mutiert und so eine neue Gesamtpopulation an Individuen erzeugt. Diesen Individuen der neuen Gesamtpopulation wird wiederum die Brauchbarkeit mittels der Fitnessfunktion bestimmt und zugewiesen (Evaluierung) und wieder eine Selektion vorgenommen. Im Anschluss wird wieder durch Klonen und Kombination die Individuen vermehrt sowie ein Teil der Gene einzelner Individuen mutiert, wodurch eine weitere neue Gesamtpopulation erzeugt wird. Die Verfahrensschritte der Evaluierung, Selektion, Vermehrung und Mutation werden solange durchgeführt, bis die Abweichung der Fitnessfunktion zwischen einem Iterationsschritt und einem unmittelbar nachfolgenden Iterationsschritt sich nicht mehr oder nur um einen Toleranzwert unterscheidet.

Um eine möglichst genaue Transformationsvorschrift T zu finden, ist es bevorzugt, wenn eine Zielfunktion $R_0$ der Optimierung die Summe der quadrierten Abweichung des erfassten Abstandes $d'_{k,n}$ zwischen zwei der erfassten Kalibrierpunkte und des bekannten Abstands $d_{k,n}$ zwischen den beiden korrespondierenden Kalibrierpunkten an der Kalibrierplatte ist.

$$R_0 = \sum_k \sum_n (d'_{k,n-} - d_{k,n})^2$$

Die iterative Optimierung wird vorzugsweise fortgesetzt, bis die Zielfunktion $R_0$ bzw. die Abweichung der Zielfunktion $R_0$ in einem Iterationsschritt von einer Abweichung in einem unmittelbar nachfolgenden Iterationsschritt sich nicht mehr unterscheidet oder höchstens um einen, insbesondere fest vorgegebenen, Toleranzwert unterscheidet.

$$\Delta R_0 = \frac{|R_{0,n+1} - R_{0,n}|}{R_{0,n}}$$

Alternativ oder zusätzlich ist es auch möglich, dass eine Zielfunktion $R_1$ der Optimierung die Summe der quadrierten Abweichungen der erfassten Position $p'_k$ der Mehrzahl von Kalibrierpunkten mit der vorbekannten Position $p_k$ der Kalibrierpunkte eine Kalibrierplatte ist.

$$R_1 = \sum_k |p'_k - p_k|^2$$

Die iterative Optimierung wird vorzugsweise fortgesetzt, bis die Zielfunktion $R_1$ bzw. die Abweichung der Zielfunktion $R_1$ in einem Iterationsschritt von einer Abweichung in einem unmittelbar nachfolgenden Iterationsschritt sich nicht mehr unterscheidet oder höchstens um einen, insbesondere fest vorgegebenen, Toleranzwert unterscheidet.

$$\Delta R_1 = \frac{|R_{1,n+1} - R_{1,n}|}{R_{1,n}}$$

Um eine möglichst genaue Transformationsvorschrift durch die iterative Optimierung mittels des nichtlinearen und ableitungsfreien Näherungsverfahrens zu erhalten, ist es bevorzugt, wenn eine Zielfunktion R der Optimierung die Summe aus der Zielfunktion $R_0$ und der Zielfunktion $R_1$ ist.

$$R = R_0 + R_1$$

Die iterative Optimierung wird vorzugsweise fortgesetzt, bis die Zielfunktion $R$ bzw. die Abweichung der Zielfunktion $R$ in einem Iterationsschritt von einer Abweichung in einem unmittelbar nachfolgenden Iterationsschritt sich nicht mehr unterscheidet oder höchstens um einen, insbesondere fest vorgegebenen, Toleranzwert unterscheidet.

$$\Delta R = \frac{|R_{n+1} - R_n|}{R_n}$$

Um der Transformationsvorschrift Startwerte zuweisen zu können und um die benötigte Rechenleistung zu verringern, ist es bevorzugt, wenn die Startwerte der Parameter der Transformation mittels eines Algorithmus der kleinsten quadratischen Abweichung voroptimiert werden und als neue Startwerte für die Optimierung mittels des nichtlinearen und ableitungsfreien Näherungsverfahrens dienen. Die Startwerte werden somit zunächst mittels eines Least-Squares-Algorithmus voroptimiert, wobei es insbesondere von Vorteil ist, wenn die Koeffizienten für eine perspektivische Transformation und/oder für die Korrektur der Verzeichnung erster Ordnung auf diese Art und Weise voroptimiert werden. Alternativ oder zusätzlich kann auch der Koeffizient der Verzeichnung zweiter Ordnung mittels eines Least-Square Algorithmus voroptimiert werden.

Weiterhin hat es sich als vorteilhaft erwiesen, wenn im Anschluss an die Optimierung der Werte der Parameter der Transformation mittels des nichtlinearen und ableitungsfreien Näherungsverfahrens nur die Werte der Koeffizienten für die perspektivische Transformation mittels eines Algorithmus der kleinsten quadratischen Abweichung nachoptimiert werden. Dabei hat sich herausgestellt, dass durch eine derartige Nachoptimierung der Fehler der Abbildung und somit die Abweichung zwischen der vorbekannten Position und/oder dem vorbekannten Abstand und dem erfassten Abstand am geringsten ist. Im Anschluss an die Nachoptimierung wird vorzugsweise die Zielfunktion R, $R_0$ oder $R_1$ erneut berechnet. Ist die relative Änderung der Zielfunktion pro Iteration (je Iterationsschnitt) bevorzugt größer oder gleich einem Toleranzwert, so wird vorzugsweise erneut die iterative Optimierung der Werte der Parameter der Transformationsvorschrift T mittels des nichtlinearen und ableitungsfreien Näherungsverfahrens durchgeführt, solange, bis das Abbruchkriterium erfüllt ist, also bis sich die Abweichung in einem Iterationsschritt von einer Abweichung in einem unmittelbar nachfolgenden Iterationsschritt nicht mehr unterscheidet oder höchstens um einen, insbesondere fest vorgegebenen, Toleranzwert unterscheidet. Als Startwerte für die Koeffizienten der perspektivischen Transformation und/oder der Verzeichnung erster Ordnung bei der iterativen Optimierung mittels des nichtlinearen und ableitungsfreien Näherungsverfahrens werden diejenigen Werte, die mittels der Nachoptimierung, also dem Algorithmus der kleinsten quadratischen Abweichung, ermittelt wurden, gewählt. Als Startwert für den Koeffizienten der Verzeichnungskorrektur zweiter Ordnung wird der in der zuvor durchgeführten iterativen Optimierung ermittelte Wert gewählt. In anderen Worten findet im Anschluss an die Nachoptimierung ein Zurückverweis (eine Schleife) zur Iterativen Optimierung mittels des nichtlinearen und ableitungsfreien Näherungsverfahrens statt. Im Anschluss an diese erneute iterative Optimierung mittels des nichtlinearen und ableitungsfreien Näherungsverfahrens ist es wiederum bevorzugt, wenn die Werte der Koeffizienten für die perspektivische Transformation mittels eines Algorithmus der kleinsten quadratischen Abweichung nachoptimiert werden. Dieser Zurückverweis und die iterative Optimierung mittels des nichtlinearen und ableitungsfreien Näherungsverfahren, sowie die anschließende Nachoptimierung wird solange wiederholt, bis die relative Änderung der Zielfunktion pro Iteration bevorzugt kleiner einem, insbesondere fest vorgegebenen, Toleranzwert ist.

Weiterhin ist es erfindungsgemäß vorgesehen und liefert ein noch besseres Transformationsergebnis, wenn im Anschluss an die Optimierung der Werte der Parameter der Transformation mittels des nichtlinearen und ableitungsfreien Näherungsverfahrens, die Werte der Koeffizienten der Verzeichnung erster Ordnung und/oder die Koeffizienten der Verzeichnung zweiter Ordnung mittels eines Algorithmus der kleinsten quadratischen Abweichung nachoptimiert werden.

Das Kalibrierverfahren bringt eine entscheidende Vereinfachung mit sich, was zu einer erhöhten Datensparsamkeit einem schnelleren Durchlaufen der eingesetzten Algorithmen führt. Es ist nämlich die Möglichkeit geschaffen, dass die Aufnahme der Kalibrierplatte zusammen mit den Kalibrierpunkten mittels der Kamera lediglich ein einziges Mal erfolgt, bevor die weiteren Schritte durchlaufen werden, wie Positionsbestimmung, Transformation mit $T_0$ sowie der weiteren Optimierung von T. Andere Kalibrierverfahren benötigen mindestens zwei Kalibrieraufnahmen mit einer Kamera, was zu einem erhöhten Datenstrom und einer erhöhten Datenverarbeitung führt.

Das erfindungsgemäße Verfahren zum Vermessen eines Sicherheits- oder Identifikationsdokuments mittels einer Kamera und einer Auswerteeinheit umfasst insbesondere die folgenden Schritte:

- Aufnahme eines Bildes des Sicherheits- oder Identifikationsdokuments mittels der Kamera,
- Positionsbestimmung mindestens eines ersten Punktes und eines zweiten Punktes des Bildes in Bildkoordinaten mittels der Auswerteeinheit,
- Ermitteln einer Transformation nach einem der Ansprüche 1 bis 11,
- Transformation der Bildkoordinaten in Weltkoordinaten mittels der so ermittelten Transformation,
- Berechnen eines Wertes in Abhängigkeit des ersten Punkts und des zweiten Punkts in Weltkoordinaten.

Somit ist es möglich, insbesondere im Rahmen der Qualitätssicherung, ein Sicherheits- oder Identifikationsdokument zu vermessen, sowie insbesondere den Randbereich des Bildes optisch erfassen und genauer zu bestimmen. Der berechnete Wert kann dabei ein Abstand oder ein Winkel oder eine Transformation sein. Dies ermöglicht es beispielsweise, im Zuge der Qualitätssicherung überprüfen zu können, ob ein Sicherheits- oder Identifikationsdokument die richtigen Abmessungen aufweist, oder ob Sicherheitsmerkmale in einem Identifikationsdokument an der richtigen Position positioniert sind. Ferner kann geprüft werden, ob die Sicherheitsmerkmale die richtige Größe aufweisen, ob sich ein Merkmal an der richtigen Position befindet (Standprüfung) und/oder die richtige Größe aufweist und/oder ob eine Schriftgröße den Anforderungen entspricht (Qualitätsprüfung).

Das erfindungsgemäße Verfahren zur Qualitätssicherung für ein Sicherheits- oder Identifikationsdokument mittels Ermittlung einer Transformation T nach einem der Ansprüche 1 bis 11, Transformation zumindest einer Position oder eines Abstandes von Weltkoordinaten in Bildkoordinaten mittels der Transformation T umfasst die Schritte der Invertierung der Transformation T mittels der Lösung einer kubischen Gleichung, und im Anschluss die Anwendung der invertierten Transformation auf die Weltkoordinaten. Mittels dieses Verfahrens ist es wiederum möglich, Weltkoordinaten, also Millimeter, wie sie beispielsweise bei Abständen oder Positionen vorgegeben sind in Bildkoordinaten umzuwandeln im Zuge der Qualitätssicherung bei Sicherheits- oder Identifikationsdokumenten.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:

Fig. 1     ein schematischer Ablauf des erfindungsgemäßen Verfahrens zur Kalibrierung einer Kamera und

Fig. 2     eine schematische Ansicht der Kalibrierplatte mit einer Mehrzahl von Kalibrierpunkten.

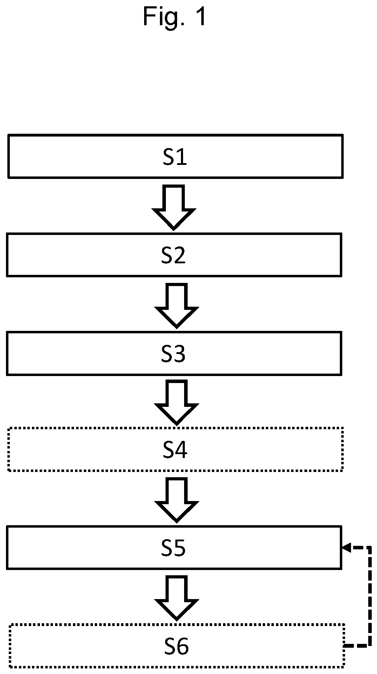

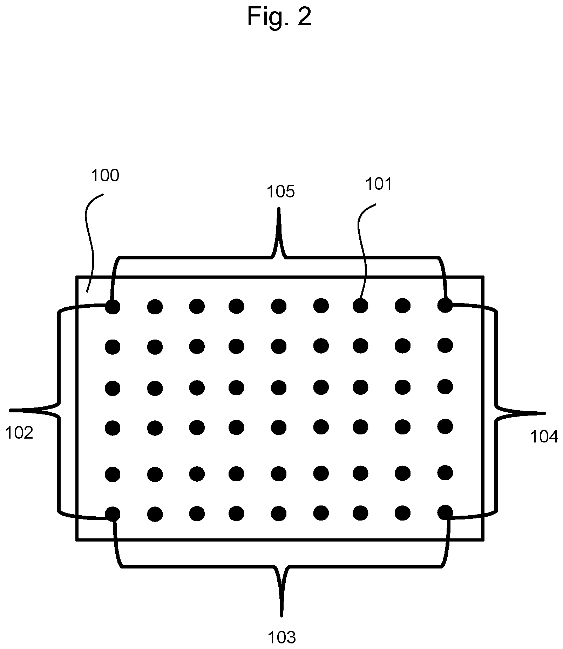

Figur 1 zeigt schematisch den Verfahrensablauf zur Kalibrierung einer Kamera mit einer Kalibrierplatte 100, die in Figur 2 näher dargestellt ist. Die Kalibrierplatte 100 weist eine Mehrzahl von mit einem vorbekannten Abstand zueinander und/oder mit einer vorbekannten Position angeordnete Kalibrierpunkte 101 auf. Zunächst wird im Schritt S1 die Kalibrierplatte 100 zusammen mit den Kalibrierpunkten 101 mittels der Kamera aufgenommen. Die Auswerteeinheit führt dann eine Positionsbestimmung der Mehrzahl an Kalibrierpunkten 101 in Bildkoordinaten, d. h. in Pixel(-koordinaten) durch (Schritt S2). Im Anschluss werden die Bildkoordinaten der Kalibrierpunkte 101 in Weltkoordinaten, d. h. in vorläufige metrische Koordinaten, vorliegend Millimeterkoordinaten, transformiert mittels einer vorgegebenen, Anfangstransformationsvorschrift $T_0$. Dieser Anfangstransformationsschritt $T_0$ enthält Parameter, welchen vorgegebenen Startwerte zugewiesen sind. Die Parameter umfassen dabei die Koeffizienten für eine perspektivische Transformation, d. h. zum einen die perspektivische Achse und zum anderen eine affine Abbildung, die Koeffizienten der Rotation, der Translation, der Deformation und die Pixelgröße berücksichtigt. Weiterhin enthält die Anfangstransformationsvorschrift $T_0$ die Parameter mit den Koeffizienten für eine Korrektur der Verzeichnung erster Ordnung. Diese umfassen ein optisches Zentrum c, die Skalierung $k_0$, den Koeffizienten der Verzeichnung erster Ordnung $k_1$ und den Koeffizienten $k_2$ für eine Korrektur der Verzeichnung zweiter Ordnung. Den Parametern werden Startwerte zugewiesen, wobei diese für die Koeffizienten für die perspektivische Transformation einer Eins-zu-Eins-Abbildung entsprechen. Die Startwerte für die Verzeichnungskorrektur werden bevorzugt als $k_0 = 1$, $k_1 = k_2 = 0$ und für c der Mittelpunkt (in Pixel) des aufgenommenen Bildes gewählt (S3) wird. Diese Startwerte der Parameter der Transformation werden optional aber bevorzugt mittels eines Algorithmus der kleinsten quadratischen Abweichung voroptimiert, wobei die Voroptimierung bevorzugt nur die Koeffizienten der perspektivischen Transformation und der Verzeichniskorrektur erster Ordnung optimiert.

Diese voroptimierten Startwerte werden nun als neue Startwerte für die iterative Optimierung der Werte der Parameter der Transformationsvorschrift T mittels eines nichtlinearen und ableitungsfreien Näherungsverfahrens verwendet. Dabei werden die Koeffizienten für die perspektivische Transformation, für die Korrektur der Verzeichnung erster Ordnung und für die Korrektur der Verzeichnung zweiter Ordnung optimiert, so lange, bis sich die Abweichung in einen Iterationsschritt der Zielfunktion von einer Abweichung in einem unmittelbar nachfolgenden Iterationsschritt nicht mehr unterscheidet oder höchstens um einen, insbesondere fest vorgegebenen, Toleranzwert unterscheidet. Die Zielfunktion ist dabei die Abweichung der erfassten Position der Mehrzahl von Kalibrierpunkten 101 mit der vorbekannten Position der Kalibrierpunkte 101 an der Kalibrierplatte 100. Die Zielfunktion $R_0$ ist dabei die Summe der quadrierten Abweichung des erfassten Abstandes zwischen zwei der erfassten Kalibrierpunkte 101 und des bekannten Abstands zwischen den beiden korrespondierenden Kalibrierpunkten 101 an der Kalibrierplatte 100. Alternativ oder zusätzlich ist die Zielfunktion $R_1$ der Optimierung die Summe der quadrierten Abweichungen der erfassten Position der Mehrzahl von Kalibrierpunkten 101 mit der vorbekannten Position der Kalibrierpunkte 101 an der Kalibrierplatte 100. Besonders bevorzugt ist die Zielfunktion R der Optimierung die Summe aus der Zielfunktion $R_0$ und der Zielfunktion $R_1$, so dass die iterative Optimierung der Werte der Parameter, mit der Transformationsvorschrift T solange durchgeführt wird, bis die relative Änderung der Zielfunktion pro Iteration bevorzugt kleiner als ein, insbesondere fest vorgegebener, Toleranzwert ist, der bevorzugt zwischen 1 x $10^{-5}$ und $1 \times 10^{-6}$ beträgt (Schritt S5). Das Downhill- Simplexverfahren selber wird durchgeführt, bis die relative Änderung dieser Zielfunktion kleiner als ein, insbesondere fest vorgegebener, Toleranzwert ist, der bevorzugt zwischen 1 x $10^{-5}$ und $1 \times 10^{-6}$ liegt. Bei der Näherung mittels des Downhill- Simplexverfahrens, werden die Koeffizienten der perspektivischen Transformation vorzugsweise auf multiplikative Weise variiert, während die Koeffizienten der Verzeichnung erster Ordnung und zweiter Ordnung auf additive Weise variiert werden. Alternativ wäre es auch möglich als Näherungsverfahren einen Algorithmus der simulierten Abkühlung zu wählen, d.h. Simulated Annealing zu wählen.

Im Anschluss an die Optimierung der Werte der Parameter der Transformation mittels des nichtlinearen und ableitungsfreien Näherungsverfahrens werden optional nun ausschließlich die Werte der Koeffizienten für die perspektivische Transformation mittels eines Algorithmus der kleinsten quadratischen Abweichung nachoptimiert (Schritt S6). Im Anschluss an die Nachoptimierung (Schritt S6) wird optional, aber bevorzugt, die Zielfunktion R, $R_0$ oder $R_1$ erneut berechnet. Ist die relative Änderung der Zielfunktion pro Iteration bevorzugt größer oder gleich einem, insbesondere fest vorgegebenem, Toleranzwert, so wird vorzugsweise erneut die iterative Optimierung der Werte der Parameter der Transformationsvorschrift T mittels des nichtlinearen und ableitungsfreien Näherungsverfahrens durchgeführt, bis das Abbruchkriterium erfüllt ist, also bis sich die Abweichung in einem Iterationsschritt von einer Abweichung in einem unmittelbar nachfolgenden Iterationsschritt nicht mehr unterscheidet oder höchstens um einen, insbesondere fest vorgegebenem, Toleranzwert unterscheidet (Schritt S6). Als Startwerte für die Koeffizienten der perspektivischen Transformation und/oder der Verzeichnung erster Ordnung der iterativen Optimierung mittels des nichtlinearen und ableitungsfreien Näherungsverfahrens (Schritt S5) werden diejenigen Werte, die mittels der Nachoptimierung (Schritt S6), also dem Algorithmus der kleinsten quadratischen Abweichung, ermittelt wurden, gewählt. Als Startwert für den Koeffizienten der Verzeichnungskorrektur zweiter Ordnung wird der in der zuvor durchgeführten iterativen Optimierung (Schritt S5) ermittelte Wert gewählt. In anderen Worten findet im Anschluss an die Nachoptimierung (Schritt S6) ein Zurückverweis (eine Schleife) zur Iterativen Optimierung (Schritt S5) mittels des nichtlinearen und ableitungsfreien Näherungsverfahrens statt. Dies ist durch den gestrichelten Pfeil in der Figur 1 dargestellt. Im Anschluss an diese erneute iterative Optimierung (Schritt S5) mittels des nichtlinearen und ableitungsfreien Näherungsverfahrens ist es wiederum bevorzugt, wenn die Werte der Koeffizienten für die perspektivische Transformation mittels eines Algorithmus der kleinsten quadratischen Abweichung nachoptimiert werden (Schritt S6). Dieser Zurückverweis und die iterative Optimierung (Schritt S5) mittels des nichtlinearen und ableitungsfreien Näherungsverfahren, sowie die anschließende Nachoptimierung (Schritt S6) werden solange wiederholt, bis die relative Änderung der Zielfunktion pro Iteration bevorzugt kleiner einem, insbesondere fest vorgegebenem, Toleranzwert ist, der bevorzugt zwischen 1 x $10^{-5}$ und $1 \times 10^{-6}$ beträgt. Somit ergeben sich die Parameter der Kalibrierung aus den Koeffizienten der Verzeichnungskorrektur, die mittels des Downhill-Simplexverfahrens in der letzten Iteration bestimmt wurden, und den zugehörigen, durch das zusätzliche Least-Squares-Verfahren gefundene, perspektivischen Transformationskoeffizienten.

Anhand der in Figur 1 dargestellten Kalibrierplatte 100 soll nun der Vorteil des erfindungsgemäßen Verfahrens anhand eines Ausführungsbeispiels näher beschrieben werden. Dazu wurden die ermittelten Abstände 102, 103, 104 und 105 auf der Kalibrierplatte 100 mit den zuvor bekannten Abständen verglichen. Dies wurde zunächst für eine Kamera, deren Kamerakalibrierung ausschließlich die Korrektur für die perspektivische Transformation und die Verzeichnung erster Ordnung berücksichtigt, durchgeführt. Dabei wurde, wie aus dem Stand der Technik bekannt, ein Algorithmus der kleinsten quadratischen Abweichung zur Optimierung der Werte der perspektivischen Abbildung und der Verzeichnung erster Ordnung angewandt. Die hierdurch optimierten Werte ergaben sich wie folgt:

| | Parameter | Wert | Bemerkung |
|---|---|---|---|
| perspektivische Abbildung | Deformationsmatrix | $D = \begin{pmatrix} 24,499643 & 0,132066 \\ 0,140183 & -24,516356 \end{pmatrix}$ | |
| | Translation | $t = \begin{pmatrix} -215,5,47 \\ -27,468 \end{pmatrix} px$ | |
| | Rotation | $r_x = 0,328°$  $r_y = 0,314°$ | |
| | Pixelgröße | $s_x = 40,816\mu m$  $s_y = 40,789\mu m$ | |
| | perspektivische Achse | $a = \begin{pmatrix} 1,41695 \\ 11,1732 \end{pmatrix} \cdot 10^{-6}$ | |
| Verzeichnung | Skalierung | $k_0 = 1$ | Wert ist festgesetzt |

**EP 4 177 840 B1**

(fortgesetzt)

| | Parameter | Wert | Bemerkung |
|---|---|---|---|
| | Verzeichnung 1. Ordnung | $k_1 = -1{,}23601 \cdot 10^{-6}$ | |
| | Verzeichnung 2. Ordnung | | |

Im Anschluss wurden die Abstände nochmals mit dem erfindungsgemäßen Verfahren zur Kamerakalibrierung bestimmt, die zusätzlich die Verzeichnung zweiter Ordnung berücksichtigt und die folgenden optimierten Werte für die Parameter für die Transformationsvorschrift ergab. Zusätzlich wurde als Startwert für die Verzeichnung 1. Ordnung beim erfindungsgemäßen Verfahren auch der zuvor berechnete Wert für die Verzeichnung erster Ordnung gewählt. Dies führte zu den gleichen Ergebnissen.

| | Parameter | Wert | Bemerkung |
|---|---|---|---|
| perspektivische Abbildung | Deformationsmatrix | $D = \begin{pmatrix} 24{,}586252 & 0{,}132353 \\ 0{,}140680 & -24{,}601750 \end{pmatrix}$ | |
| | Translation | $t = \begin{pmatrix} -217{,}974 \\ -29{,}370 \end{pmatrix} px$ | |
| | Rotation | $r_x = 0{,}328°$ $r_y = 0{,}314°$ | |
| | Pixelgröße | $s_x = 40{,}671 \mu m$ $s_y = 40{,}648 \mu m$ | |
| | perspektivische Achse | $a = \begin{pmatrix} 4{,}99873 \\ 11{,}2062 \end{pmatrix} \cdot 10^{-6}$ | |
| Verzeichnung | Skalierung | $k_0 = 1{,}000443$ | Startwert: 1,0 |
| | Verzeichnung 1. Ordnung | $k_1 = 5{,}903533 \cdot 10^{-6}$ | Startwert: -0,424034 · 10⁻⁶ |
| | Verzeichnung 2. Ordnung | $k_2 = -1{,}63550 \cdot 10^{-9}$ | Startwert: 0 |

Wie der untenstehenden Tabelle zu entnehmen ist, sind die Abweichungen zwischen den bekannten Abständen 102, 103, 104 und 105 und den ermittelten Abständen beim erfindungsgemäßen Verfahren unter zusätzlicher Berücksichtigung der Verzeichnung zweiter Ordnung geringer, als wenn die Kamerakalibrierung nur die Verzeichnung erster Ordnung berücksichtigt.

| Abstand | Bekannter Abstand | Abweichung bekannter Abstand zu ermitteltem Abstand ohne Verzeichnung 2. Ordnung | Abweichung bekannter Abstand zu ermitteltem Abstand mit Verzeichnung 2. Ordnung | Verringerung der Abweichung durch das hier beschriebene Verfahren |
|---|---|---|---|---|
| 102 | 80mm | 40μm | 2μm | 38μm (95%) |
| 103 | 150mm | 59μm | 18μm | 41μm (69%) |
| 104 | 80mm | 57μm | 17μm | 40μm (70%) |
| 105 | 150mm | 131μm | 46μm | 85μm (65%) |

Um ein Sicherheits- oder Identifikationsdokument vermessen zu können, wird zunächst ein Bild des Sicherheits- oder Identifikationsdokuments mittels der kalibrierten Kamera aufgenommen. Die Auswerteeinheit führt wiederum eine Positionsbestimmung von mindestens einem ersten Punkt und einem zweiten Punkt des Bildes in Bildkoordinaten, d. h. in Pixel durch. Die Bildkoordinaten werden in Wertkoordinaten transformiert mittels der Transformationsvorschrift, welche

8

im obenstehend beschriebenen Verfahren zur Kamerakalibrierung ermittelt wurde, sodass im Anschluss ein Wert in Abhängigkeit von mindestens dem ersten Punkt und dem zweiten Punkt berechnet und gegebenenfalls mit einem Referenzwert verglichen werden kann. Der Wert kann dabei ein Abstand oder ein Winkel oder eine Transformation sein. Hierdurch lassen sich im Zuge der Qualitätssicherung die Abmessungen von Sicherheits- oder Identifikationsdokument bestimmen und überprüfen. Darüber hinaus kann die korrekte Positionierung von Sicherheitsmerkmalen, Bildern, Schriftzügen optisch erfasst und verifiziert werden.

Durch die Kamerakalibrierung und die Ermittlung einer Transformationsvorschrift mit der Verzeichnungskorrektur zweiter Ordnung, insbesondere mittels des ableitungsfreien nichtlinearen Näherungsverfahrens, ist die Transformation, also die Transformationsvorschrift, durch Lösung einer kubischen Gleichung zudem invertierbar. Dies bedeutet, dass nicht nur eine Transformation von Bildkoordinaten r in Weltkoordinaten $\hat{r}$ mittels der Transformationsvorschrift möglich ist, sondern auch eine umgekehrte Transformation von Weltkoordinaten $\hat{r}$ in Bildkoordinaten $\underline{r}$, indem die Transformationsvorschrift T durch Lösung einer kubischen Gleichung invertiert wird und die invertierte Transformationsvorschrift $T_{\hat{r}}^{-1}$ im Anschluss auf die erfassten Weltkoordinaten angewandt wird.

$$\underline{r} = \begin{pmatrix} x \\ y \end{pmatrix} = T_{\hat{r}}^{-1} \cdot \hat{r}$$

Dies ermöglicht es, Weltkoordinaten in Bildkoordinaten zu transferieren und auch im Randbereich eine genauere Transformation zu erhalten. Darüber hinaus kann im Rahmen der Qualitätssicherung beispielsweise die Schriftgröße überprüft, und ebenso die Positionierung von Bildern und Sicherheitsmerkmalen verifiziert werden.

BEZUGSZEICHENLISTE

| | |
|---|---|
| 100 | Kalibrierplatte |
| 101 | Kalibierpunkt |
| 102 | Abstand zwischen einem der Kalibierpunkte und einem weiteren der Kalibierpunkte |
| 103 | Abstand zwischen einem der Kalibierpunkte und einem weiteren der Kalibierpunkte |
| 104 | Abstand zwischen einem der Kalibierpunkte und einem weiteren der Kalibierpunkte |
| 105 | Abstand zwischen einem der Kalibierpunkte und einem weiteren der Kalibierpunkte |

**Patentansprüche**

1. Verfahren zur Kalibrierung einer Kamera mit einer Kalibrierplatte (100), die eine Mehrzahl von mit einem vorbekannten Abstand zueinander und/oder mit einer vorbekannten Position angeordneten Kalibierpunkten (101) aufweist, umfassend die Schritte:

- Aufnahme der Kalibrierplatte (100) zusammen mit den Kalibrierpunkten (101) mittels der Kamera (S1),
- Positionsbestimmung der Mehrzahl an Kalibierpunkten (101) in Bildkoordinaten mittels einer Auswerteeinheit (S2),
- Transformation der Bildkoordinaten der Kalibierpunkte (101) in Weltkoordinaten mittels einer vorgegebenen Anfangstransformationsvorschrift $T_0$, die Parameter enthält, welchen vorgegebene Startwerte zugewiesen sind, wobei die Parameter die Koeffizienten für eine perspektivische Transformation, für eine Korrektur der Verzeichnung erster Ordnung und für eine Korrektur der Verzeichnung zweiter Ordnung umfassen (S3),
- Iterative Optimierung der Werte der Parameter der Transformationsvorschrift T mittels eines nichtlinearen und ableitungsfreien Näherungsverfahrens anhand der Abweichung der erfassten Position der Mehrzahl von Kalibierpunkten (101) mit der vorbekannten Position der Kalibierpunkte (101) an der Kalibrierplatte (100) und/oder anhand der Abweichung des erfassten Abstands zwischen zwei der erfassten Kalibierpunkte (101) und des bekannten Abstands zwischen den beiden korrespondierenden Kalibierpunkten (101) an der Kalibrierplatte (100), solange, bis sich die Abweichung in einem Iterationsschritt von einer Abweichung in einem unmittelbar nachfolgenden Iterationsschritt nicht mehr unterscheidet oder höchstens um einen Toleranzwert unterscheidet (S5), wobei im Anschluss an die Optimierung der Werte der Parameter der Transformation mittels des nichtlinearen und ableitungsfreien Näherungsverfahrens zusätzlich die Werte der Koeffizienten der Verzeichnung erster Ordnung mittels eines Algorithmus der kleinsten quadratischen Abweichung nachoptimiert werden und/oder dass im Anschluss an die Optimierung der Werte der Parameter der Transformation mittels des nichtlinearen und ableitungsfreien Näherungsverfahrens zusätzlich die Werte der Koeffizienten der Verzeichnung zweiter Ordnung mittels eines Algorithmus der kleinsten quadratischen Abweichung nachoptimiert werden

2. Verfahren nach Anspruch 1, **dadurch gekennzeichnet, dass** das Näherungsverfahren ein Downhill-Simplex Verfahren ist.

3. Verfahren nach Anspruch 1, **dadurch gekennzeichnet, dass** das Näherungsverfahren ein Algorithmus der simulierten Abkühlung ist.

4. Verfahren nach Anspruch 1, **dadurch gekennzeichnet, dass** das Näherungsverfahren ein genetischer Algorithmus ist.

5. Verfahren nach einem der Ansprüche 1 bis 4, **dadurch gekennzeichnet, dass** eine Zielfunktion $R_0$ der Optimierung die Summe der quadrierten Abweichung des erfassten Abstandes zwischen zwei der erfassten Kalibrierpunkte (101) und des bekannten Abstands zwischen den beiden korrespondierenden Kalibrierpunkten (101) an der Kalibrierplatte (100) ist.

6. Verfahren nach einem der Ansprüche 1 bis 5, **dadurch gekennzeichnet, dass** eine Zielfunktion $R_1$ der Optimierung die Summe der quadrierten Abweichungen der erfassten Position der Mehrzahl von Kalibierpunkten (101) mit der vorbekannten Position der Kalibrierpunkte (101) an der Kalibrierplatte (100) ist.

7. Verfahren nach Anspruch 6, **dadurch gekennzeichnet, dass** eine Zielfunktion R der Optimierung die Summe aus der Zielfunktion $R_0$ und der Zielfunktion $R_1$ ist.

8. Verfahren nach einem der Ansprüche 1 bis 7, **dadurch gekennzeichnet, dass** die Startwerte der Parameter der Transformation mittels eines Algorithmus der kleinesten quadratischen Abweichung voroptimiert werden und als neue Startwerte für die Optimierung mittels des nichtlinearen und ableitungsfreien Näherungsverfahrens dienen (S4).

9. Verfahren nach einem der Ansprüche 1 bis 8, **dadurch gekennzeichnet, dass** im Anschluss an die Optimierung der Werte der Parameter der Transformation mittels des nichtlinearen und ableitungsfreien Näherungsverfahrens nur die Werte der Koeffizienten für die perspektivische Transformation mittels eines Algorithmus der kleinsten quadratischen Abweichung nachoptimiert werden (S6).

10. Verfahren nach Anspruch 9, **dadurch gekennzeichnet, dass** im Anschluss an die Nachoptimierung mittels des Algorithmus der kleinsten quadratischen Abweichung eine neue Zielfunktion (R, $R_0$, $R_1$) nachberechnet wird.

11. Verfahren nach einem der Ansprüche 1 bis 10, **dadurch gekennzeichnet, dass** die Aufnahme der Kalibrierplatte (100) zusammen mit den Kalibrierpunkten (101) lediglich ein einziges Mal erfolgt, bevor die weiteren Schritte durchlaufen werden.

12. Verfahren zum Vermessen eines Sicherheits- oder Identifikationsdokuments mittels einer Kamera und einer Auswerteeinheit, umfassend die folgenden Schritte:

- Aufnahme eines Bildes des Sicherheits- oder Identifikationsdokuments mittels der Kamera,
- Positionsbestimmung mindestens eines ersten Punktes und eines zweiten Punktes des Bildes in Bildkoordinaten mittels der Auswerteeinheit,
- Ermitteln einer Transformation nach einem der Ansprüche 1 bis 11,
- Transformation der Bildkoordinaten in Weltkoordinaten mittels der so ermittelten Transformation.
- Berechnen eines Wertes in Abhängigkeit von mindestens dem ersten und dem zweiten Punkt in Weltkoordinaten.

13. Verfahren zur Qualitätssicherung für ein Sicherheits- oder Identifikationsdokument mittels Ermittlung einer Transformation T nach einem der Ansprüche 1 bis 11, Transformation zumindest einer Position oder eines Abstandes von Weltkoordinaten in Bildkoordinaten mittels der Transformation T, wobei die Transformation durch Lösung einer kubischen Gleichung invertiert wird und im Anschluss auf erfasste Weltkoordinaten angewandt wird.

**Claims**

1. A method for calibrating a camera with a calibration plate (100) that has a plurality of calibration points (101) arranged at a known distance from each other and/or at a known position, comprising the steps of:

   - recording the calibration plate (100) together with the calibration points (101) using the camera (S1),
   - determining the position of the plurality of calibration points (101) in image coordinates by means of an evaluation unit (S2),
   - transforming the image coordinates of the calibration points (101) into world coordinates by means of a predetermined initial transformation rule $T_0$, which contains parameters to which predetermined start values are assigned, wherein the parameters comprise the coefficients for a perspective transformation, for a correction of first-order distortion, and for a correction of second-order distortion (S3),
   - iterative optimization of the values of the parameters of the transformation rule T by means of a nonlinear and derivative-free approximation method based on the deviation of the detected position of the plurality of calibration points (101) from the known position of the calibration points (101) on the calibration plate (100) and/or based on the deviation of the detected distance between two of the detected calibration points (101) and the known distance between the two corresponding calibration points (101) on the calibration plate (100),

   until the deviation in one iteration step no longer differs from a deviation in an immediately subsequent iteration step or differs by no more than a tolerance value (S5), wherein, following the optimization of the values of the transformation parameters using the nonlinear and derivative-free approximation method, the values of the first-order distortion coefficients are additionally post-optimized using a least- quadratic deviation algorithm and/or that, following the optimization of the values of the transformation parameters using the nonlinear and derivative-free approximation method, the values of the second-order distortion coefficients are additionally post-optimized using a least-squares algorithm.

2. The method according to claim 1, **characterized in that** the approximation method is a downhill simplex method.

3. The method according to claim 1, **characterized in that** the approximation method is a simulated annealing algorithm.

4. The method according to claim 1, **characterized in that** the approximation method is a genetic algorithm.

5. The method according to any one of claims 1 to 4, **characterized in that** a target function $R_0$ of the optimization is the sum of the squared deviation of the detected distance between two of the detected calibration points (101) and the known distance between the two corresponding calibration points (101) on the calibration plate (100).

6. The method according to any one of claims 1 to 5, **characterized in that** a target function $R_1$ of the optimization is the sum of the squared deviations of the detected position of the plurality of calibration points (101) from the known position of the calibration points (101) on the calibration plate (100).

7. The method according to claim 6, **characterized in that** a target function R of the optimization is the sum of the target function $R_0$ and the target function $R_1$.

8. The method according to any one of claims 1 to 7, **characterized in that** the start values of the parameters of the transformation are pre-optimized by means of a least squares algorithm and serve as new start values for the optimization by means of the nonlinear and derivative-free approximation method (S4).

9. The method according to any one of claims 1 to 8, **characterized in that**, following the optimization of the values of the parameters of the transformation using the nonlinear and derivative-free approximation method, only the values of the coefficients for the perspective transformation are post-optimized using a least squares algorithm (S6).

10. The method according to claim 9, **characterized in that**, following the post-optimization using the least squares algorithm, a new objective function $(R, R_0, R_1)$ is recalculated.

11. The method according to any one of claims 1 to 10, **characterized in that** the calibration plate (100) is recorded together with the calibration points (101) only once before the further steps are carried out.

12. A method for measuring a security or identification document using a camera and an evaluation unit, comprising the following steps:

    - capturing an image of the security or identification document using the camera,
    - determining the position of at least a first point and a second point of the image in image coordinates using the evaluation unit,
    - determining a transformation according to any one of claims 1 to 11,
    - transforming the image coordinates into world coordinates using the transformation thus determined,
    - calculating a value depending on at least the first and second points in world coordinates.

13. The method for quality assurance for a security or identification document by determining a transformation T according to any one of claims 1 to 11, transforming at least one position or one distance from world coordinates into image coordinates using the transformation T, wherein the transformation is inverted by solving a cubic equation and is then applied to captured world coordinates.


**Revendications**

1. Procédé d'étalonnage d'une caméra avec une plaque d'étalonnage (100) qui présente une pluralité de points d'étalonnage (101) agencés à une distance déjà connue les uns par rapport aux autres et/ou avec une position déjà connue, comprenant les étapes suivantes :

    - enregistrement de la plaque d'étalonnage (100) conjointement avec les points d'étalonnage (101) au moyen de la caméra (S1),
    - détermination de la position de la pluralité de points d'étalonnage (101) dans des coordonnées d'image au moyen d'une unité d'évaluation (S2),
    - transformation des coordonnées d'image des points d'étalonnage (101) en coordonnées universelles au moyen d'une prescription de transformation initiale prédéfinie T0 qui contient des paramètres auxquels sont attribuées des valeurs de départ prédéfinies, dans lequel les paramètres comprennent les coefficients pour une transformation de perspective, pour une correction de la distorsion de premier ordre et pour une correction de la distorsion de second ordre (S3),
    - optimisation itérative des valeurs des paramètres de la prescription de transformation T au moyen d'un procédé d'approximation non linéaire et sans dérivation à l'aide de l'écart de la position détectée de la pluralité de points d'étalonnage (101) par rapport à la position déjà connue des points d'étalonnage (101) au niveau de la plaque d'étalonnage (100) et/ou à l'aide de l'écart de la distance détectée entre deux des points d'étalonnage (101) détectés et de la distance connue entre les deux points d'étalonnage (101) correspondants au niveau de la plaque d'étalonnage (100) tant que l'écart dans une étape d'itération ne se distingue plus d'un écart dans une étape d'itération directement consécutive ou se distingue au plus d'une valeur de tolérance (S5), dans lequel suite à l'optimisation des valeurs des paramètres de la transformation au moyen du procédé d'approximation non linéaire et sans dérivation, les valeurs des coefficients de la distorsion de premier ordre sont en outre optimisées ultérieurement au moyen d'un algorithme du plus petit écart quadratique et/ou suite à l'optimisation des valeurs des paramètres de la transformation au moyen du procédé d'approximation non linéaire et sans dérivation, les valeurs des coefficients de la distorsion de second ordre sont en outre optimisées ultérieurement au moyen d'un algorithme du plus petit écart quadratique.

2. Procédé selon la revendication 1, **caractérisé en ce que** le procédé d'approximation est un procédé Downhill-Simplex.

3. Procédé selon la revendication 1, **caractérisé en ce que** le procédé d'approximation est un algorithme du refroidissement simulé.

4. Procédé selon la revendication 1, **caractérisé en ce que** le procédé d'approximation est un algorithme génétique.

5. Procédé selon l'une quelconque des revendications 1 à 4, **caractérisé en ce qu'**une fonction cible Ro de l'optimisation est la somme de l'écart quadratique de la distance détectée entre deux des points d'étalonnage (101) détectés et de la distance connue entre les deux points d'étalonnage (101) correspondants au niveau de la plaque d'étalonnage (100).

6.  Procédé selon l'une quelconque des revendications 1 à 5, **caractérisé en ce qu'**une fonction cible Ri de l'optimisation est la somme des écarts quadratiques de la position détectée de la pluralité de points d'étalonnage (101) avec la position déjà connue des points d'étalonnage (101) au niveau de la plaque d'étalonnage (100).

7.  Procédé selon la revendication 6, **caractérisé en ce qu'**une fonction cible R de l'optimisation est la somme de la fonction cible R0 et de la fonction cible R1.

8.  Procédé selon l'une quelconque des revendications 1 à 7, **caractérisé en ce que** les valeurs de départ des paramètres de transformation sont préoptimisées au moyen d'un algorithme du plus petit écart quadratique et servent de nouvelles valeurs de départ pour l'optimisation au moyen du procédé d'approximation non linéaire et sans dérivation (S4).

9.  Procédé selon l'une quelconque des revendications 1 à 8, **caractérisé en ce que** suite à l'optimisation des valeurs des paramètres de transformation au moyen du procédé d'approximation non linéaire et sans dérivation, seules les valeurs des coefficients pour la transformation de perspective sont optimisées ultérieurement au moyen d'un algorithme du plus petit écart quadratique (S6).

10. Procédé selon la revendication 9, **caractérisé en ce qu'**une nouvelle fonction cible (R, R0, R1) est recalculée suite à l'optimisation ultérieure au moyen de l'algorithme du plus petit écart quadratique.

11. Procédé selon l'une quelconque des revendications 1 à 10, **caractérisé en ce que** l'enregistrement de la plaque d'étalonnage (100) est effectué conjointement avec les points d'étalonnage (101) juste une seule fois avant que les autres étapes ne soient effectuées.

12. Procédé de mesure d'un document de sécurité ou d'identification au moyen d'une caméra et d'une unité d'évaluation, comprenant les étapes suivantes :

    - enregistrement d'une image du document de sécurité ou d'identification au moyen de la caméra,
    - détermination de la position d'au moins un premier point et d'un second point de l'image dans des coordonnées d'image au moyen de l'unité d'évaluation,
    - détermination d'une transformation selon l'une quelconque des revendications 1 à 11,
    - transformation des coordonnées d'image en coordonnées universelles au moyen de la transformation ainsi déterminée,
    - calcul d'une valeur en fonction d'au moins le premier et le second point dans des coordonnées universelles.

13. Procédé d'assurance qualité pour un document de sécurité ou d'identification au moyen de la détermination d'une transformation T selon l'une quelconque des revendications 1 à 11, transformation d'au moins une position ou d'une distance de coordonnées universelles en coordonnées d'image au moyen de la transformation T, dans lequel la transformation est inversée par résolution d'une équation cubique et est ensuite appliquée aux coordonnées universelles détectées.

Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3457682 A1

**In der Beschreibung aufgeführte Nicht-Patentliteratur**

- Lens Radial Distortion Calibration Using Homography of Central Points. **NOWAKOWSKI A**. EUROCON, 2007, THE INTERNATIONAL CONFERENCE ON ''COMPUTER AS A TOOL. IEEE, 09 September 2007, 340-343

- Research on the Calibration of Binocular Camera Based on BP Neural Network Optimized by Improved Genetic Sumulated Annealing Algorithm. **CHEN LONG et al.** IEEE Access. IEEE, 05 May 2020, vol. 8, 103815-103832